# EUROPEAN PATENT APPLICATION

(11) **EP 1 176 491 A2**
(43) Date of publication of application: **30.01.2002**
(21) Application number: 01304582.8
(22) Date of filing: 24.05.2001
(51) Int. Cl.: G06F 1/00

(54) **Software program providing system and software program providing method**

(30) Priority: 25.05.2000 JP 2000154988
(71) Applicant: SONY CORPORATION, Tokyo (JP)
(72) Inventor: Ueda, Satoru, Shinagawa-ku, Tokyo (JP)
(74) Representative: Nicholls, Michael John

(57) **Abstract**

A software program providing system in which a predetermined limitation can be established for its access, thus allowing charge of a fee corresponding to the amount of access to the software program. By using a software program storage medium storing an individual identification code along with the provided software program, a service provider managing a supplemental pay function of the software program uses such individual identification code as a search key for storing user's individual information, information on software access limitation range and information on the condition of access to the software program. By doing so, the individual identification code can be read out form the software program storage medium installed in a user terminal and then, based on such information on the range of access limitation and information on the condition of access to the software program, the user terminal is authorized to access the software program.

## Description

The present invention relates to a software program providing system and a software program providing method and, more particularly, relates to a software program providing system and a software program providing method in which a limitation can be added for the access to the software program.

Conventionally, a software program can be provided in a variety of forms. However, conventional forms of licensing access to a software program provide license only for unlimited access thereof. As a result, even a user willing to make use of only a detemined portion of a software for a limited number of times or a user willing to use only a reduced portion of the functions of the software program, had to purchase an entire software program with high functionality, for unlimited access. As a consequence, the user had no alternative but to purchase access rights for a product that exceeds his/her requirements, thus such purchase frequently used to be very expensive.

This was also an obstacle for a user in a small organization to have access to a software program. For example, for a image editing software, in most of the cases, a low resolution output is enough, so it is not necessary to provide a high resolution process for a user to which low resolution is enough, thus there is no problem if, for example, an access to a software was restricted to a limited number of processing cycles. Even for a case like this, in a conventional software delivery method, it was necessary to purchase a software program with a wide range of processing capacity, able to cope with operations from low to high resolution.

In addition, even from a software program developer/supplier's point of view, if it is possible to realize a so-called benefit assessment method, in which a greater amount is charged to a user that uses the software with highest frequency, it is possible to request payment of a fee corresponding to the amount of service actually provided. As it was difficult to realize such a charging system in the conventional methods, it is believed that many business opportunities were lost.

On the other hand, although fabricating a software program with a limited access of a number of counts is theoretically possible to realize, in reality was not easy to keep control when considering the distribution network and after the software has been delivered so as to make a user to end the access to the software program after a designated number of counts. In addition, the limitation of use could be decoded by manipulation of the software program, so even if existed, such limitation of number of counts was frequently ineffective.

As mentioned above, the related art has an inconvenience that a software program providing method or a software program providing system was provided such that such software program providing method or system was provided having a specification that exceeded that of what was actually required by a user, thus the user has to cope with an excessive charge.

It is an object of the present invention to solve the problems mentioned above with a comparatively simple structure, applying a designated limitation to the access to a provided software program, thus allowing realization of a software program providing system and a software program providing method that can be charged adequately according to an access thereof.

In order to attain such object, according to a preferred embodiment of the present invention, a software program providing system providing and managing the access to a software program includes: a storage medium storing an individual identification code along with the provided software program; a user terminal including the storage medium and through which the user accesses the software program; a database management means managed by a software program management business operator that, by using the individual identification code as a search key, saves individual information, information regarding an access limitation range to the software program and information regarding conditions of access to the software program, of a user possessing the storage medium; and an information communication means that ties up this database management means with the user terminal. Then, through the information communication means, the database management means reads out the individual identification code from the storage medium installed in the user terminal, and, based on the information regarding the access limitation range to the software program and the information regarding conditions of access to the software program searched by the individual identification code as a search key, provides to the user terminal an authorization for access to the software program.

Through such procedure, it is possible to add a predetermined limitation or restriction to the access to the software program to be provided, thus a software program providing system allowing charge of an appropriate fee according to the conditions of access by a user can be realized.

According to another preferred embodiment of the present invention, a software program providing method providing and managing the access to a software program includes: a process of storing an individual identification code to a storage medium along with the provided software program; a process of collecting user's individual information, information regarding an access limitation range to the software program and information on conditions of access to the software program of a user, based on the individual identification code; a process of communicating between a user terminal installed in the storage medium and a database management means managing the database, when the user accesses the software program stored in the storage medium; and a process of providing authorization to the user terminal for accessing the software program, based on the information on the access limitation range to the software program and the information on the condition of access to the software program searched from the database, in which, if such access is restricted to the access limitation range.

From such method, it is possible to add a predetermined limitation to the access to the software program to be provided, thus a software program providing method allowing charge of an appropriate fee according to conditions of access by a user can be realized.

With the software program providing system according to the preferred embodiment of the present invention, it is possible to provide limited rights to access the software program, to a user willing to perform a designated operation a limited number of times and, in addition, it is possible to realize a software program providing system in which it is possible to purchase additional rights. As a result it becomes possible for a user to purchase rights to access only a requested portion of the software program, thus a software program can be accessed at an appropriate fee.

Therefore, the use of the software program can be promoted to a user of a small organization, and while giving contribution to a positive development of the software industry, even for the software program developer or supplier, a so-called benefit assessment method can be established, thus allowing realization of a new business opportunity.

In addition, the software program providing system according to another preferred embodiment of the present invention, in which charge a purchase of additional access rights to the software program can be realized by means of the database management means having a charging means for charging according to the conditions of access to the software program.

A safer software program providing system can be realized in respect to secrecy protection, by means of the information communication means including a ciphering means for ciphering the communication between the database and the user terminal. It is also possible to provide the ciphering means at both the database and the user terminal sides.

Also, the software program providing system according to another preferred embodiment of the present invention can be easily realized by means of a storage medium already existing in the market, if the storage means includes a DVD-ROM (Digital Versatile Disc - Read Only Memory) and the individual identification code includes a BCA code recorded by a laser beam during fabrication process.

With the software program providing method according to the preferred embodiment of the present invention mentioned above, it is possible to provide to a user willing to perform a designated operation a limited number of times, limited rights to access the software program. In addition, it is possible to realize a software program providing method in which it is possible to purchase additional rights to access the software program.

As a result, it becomes possible for a user to purchase rights to access only a requested portion of the software program, thus a software program can be accessed at an appropriate fee.

A software program providing method according to another preferred embodiment of the present invention, in which charging for purchase of additional access rights to a software program can be realized by means of the software access authorization process having a process of charging depending on the conditions of access to the software program.

Also, a safer software program providing system according to another embodiment of the present invention can be realized in respect to secrecy protection, by means of the information communication process including a ciphering process for ciphering the communication between the database management means and the user terminal.

The present invention will be further described by way of example with reference to the accompanying drawings, in which:
FIG. 1 is a diagram showing a structure of a record of a database used for the software program providing system according to a preferred embodiment of the present invention;
FIG. 2 is a block diagram of a software program providing system according to a preferred embodiment of the present invention;
FIG. 3 shows an example of a software program providing or supplying medium used for a software program providing system according to a preferred embodiment of the present invention;
FIG. 4 is a flowchart showing a process in which a user accesses a software program through a software program providing method according to a preferred embodiment of the present invention;
FIG. 5 is a flowchart showing a process in which a user purchases additional rights to use a supplemental pay function through the software program providing method according to the preferred embodiment of the present invention;
FIG. 6 shows one example of a screen display in a user terminal for a software program providing system according to a preferred embodiment of the present invention; and
FIG. 7 is a block diagram showing a construction of a user terminal of a software program providing system according to a preferred embodiment of the present invention.

A software program providing method according to the preferred embodiment of the present invention is described in detail, with reference to the accompanying drawings.

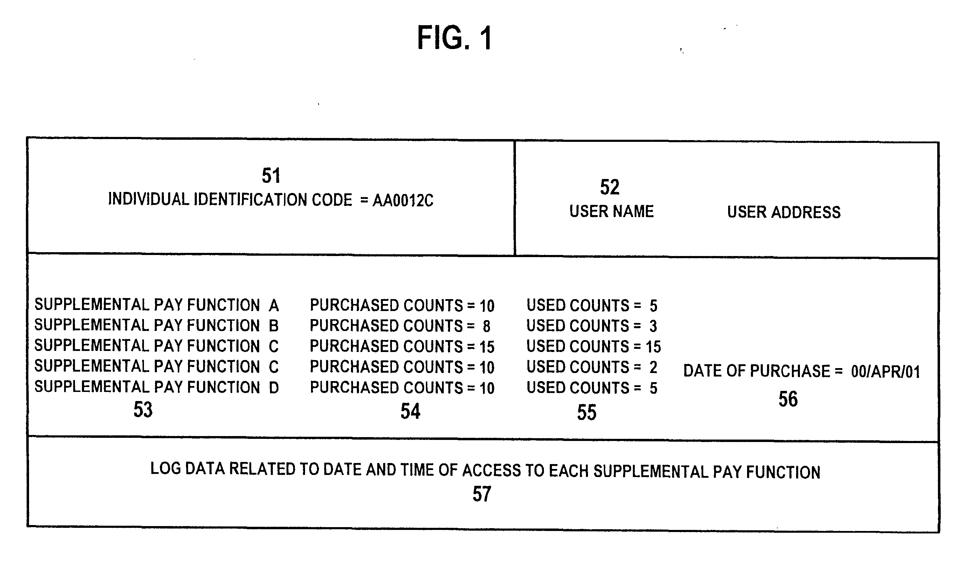

A database having a structure shown in FIG. 1 is prepared. In such database, there is provided an individual identification 51, a user information 52, a supplemental pay function list 53, a number of acquired sets 54 of such supplemental pay function list 53, an additional purchase record 56, an actual access information 57 and the like.

As a result, it is possible to search contents of each software program providing medium through the individual identification 51 that is set to be unique for each software program providing medium. In addition, it is preferable that a password or a similar procedure is done in order to avoid unauthorized access, theft or the like.

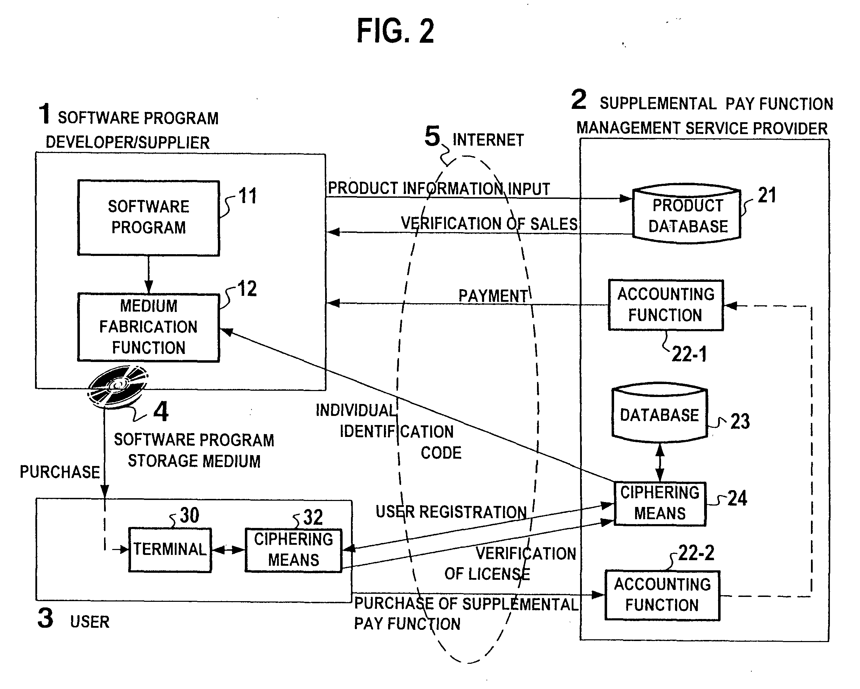

FIG. 2 shows a block diagram of the software program providing system according to the preferred embodiment of the present invention, in which block 1 is a software program developer/supplier, block 2 is a supplemental pay function management service provider, block 3 is a user, block 4 is a software program storage medium, which is a software package product according to the preferred embodiment of the present invention, block 11 is a software program, block 12 is a software program storage medium fabrication function, block 21 is a product database, block 22 is an accounting function, block 23 is a database, block 24 is a ciphering means, block 30 is a user terminal and block 32 is another ciphering means.

Although it is conceivable according to a preferred embodiment of the present invention that each of a software program developer/supplier 1 has a database as shown in FIG.1, in view of the fact that it is possible to make common use of such database without restriction to a specific software program provider, it is also conceivable that someone possessing a database system becomes a supplemental pay function management service provider 2 and performs management and maintenance of the supplemental pay function. A case having such a service provider 2 will be considered here as another preferred embodiment of the present invention. In addition, such preferred embodiment of the invention is such that the service provider 2 has business performance based on receiving payment of a fee related to the common use of the database from the software program provider 1, or by receiving a margin of profit from marketing of a supplemental pay function.

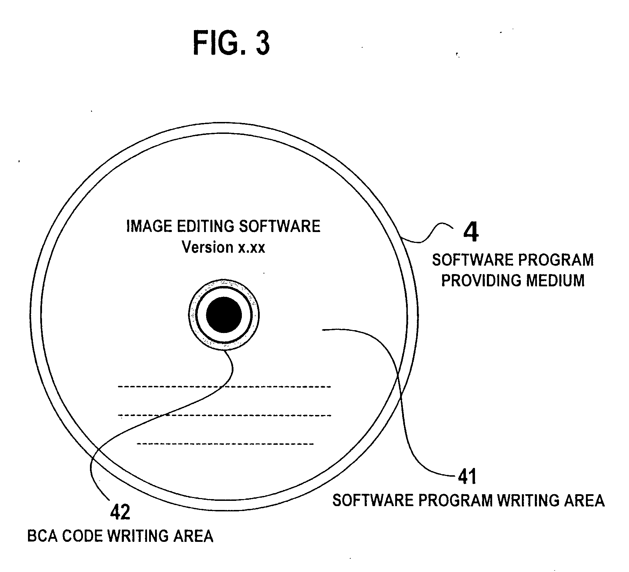

One example of software program providing medium 4 is shown in FIG. 3. The software program is a software program for image editing and in the software program supplying medium 4, a software program writing area 41 and an individual identification code writing area 42 are provided. This can be easily realized in a DVD-ROM (Digital Versatile Disc - Read Only Memory) by applying a method of recording an individual code (a BCA code) by means of a laser beam during the fabrication process thereof.

It is preferable that a function of recognizing a software program to be provided is included in the identification code. As a result, the service provider 2 is enabled to recognize the type of software program that is conveyed by the individual identification code and thus recognize what supplemental pay function is included in such software program.

Such recognition can be performed even more appropriately if the service provider 2 has a software program product database 21. In addition, such software program product database 21 can be used for marketing activity, if a fee for the supplemental pay function, a sales performance for the supplemental pay function or the like is recorded therein.

Further, if it is possible for the software program provider 1 to access the software program product database 21 through an information communication means 5 such as the Internet, an effective means for accurately providing information for the software program provider 1, such as marketing trends or the like can be realized.

The software program provider 1 provides a unique identification code for each medium at the event of fabricating the software package product 4. It is also preferable that a supplemental pay function is previously attached, so a corresponding fee thereof is added to the medium's price and, still, by setting up such price as a default value in the product database 21 of the service provider 2, it is possible to supply the product without delay.

When purchasing the software program storage medium 4, the software user 3 does registration of the user information in the database 23 of the service provider 2, through the ciphering means 32, the information communication means 5 and the ciphering means 24. At this event, if the user 3 performs a registration operation by placing the software program supplying medium 4 in the user terminal 30 (a personal computer or the like) through which the user 3 accesses the software program, it is possible to automatically read out the individual identification code by means of a medium read out device of such terminal. Registered user information is stored upon being connected to an individual identification code of each medium.

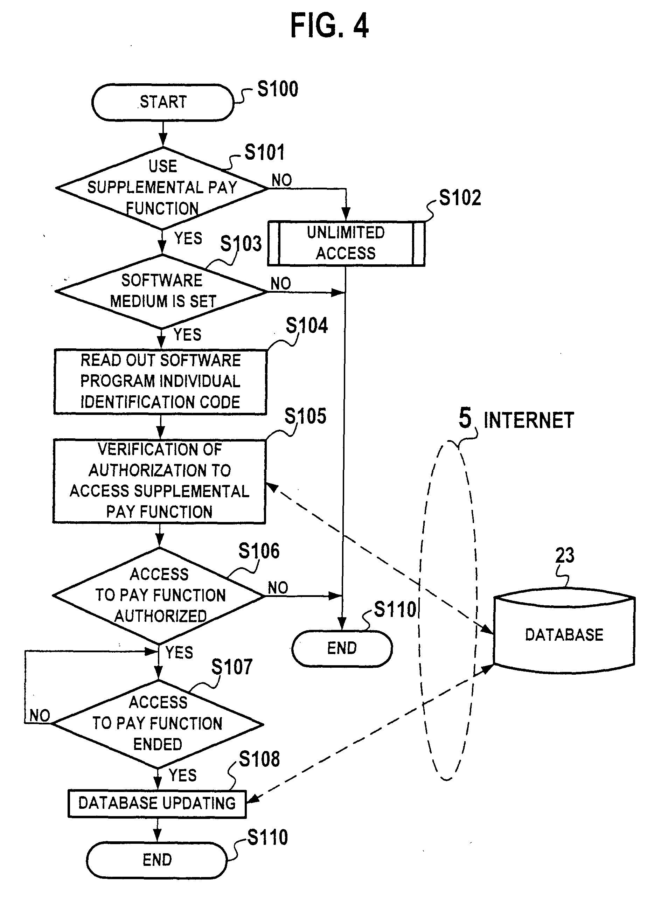

A process in which a user accesses a software program is described below with reference to FIG. 4.

After starting flow in step 100, the user 3 decides whether to use the supplemental pay function, in step 101 and, if not using the supplemental pay function, accesses the software program unlimitedly, in step 102.

If using the supplemental pay function, the user 3 sets the medium 4 to the user terminal 30, in step 103, in order to enabling the user terminal 30 to electrically read out the individual identification code of each medium, in step 104. Moreover, although it can be conveyed that such code can be stored into a device such as a hard disk of the user terminal 30, such method is discouraged since it bears a risk of making the individual identification code circulate separated from the medium 4, thus increasing a risk of causing an occurrence of unauthorized access to the supplemental pay function.

If the medium 4 is set to the user terminal 30 in step 103, the software program reads out the individual identification code of each medium, in step 104, and sends the individual identification code of each medium, as well as a supplemental pay function that the user wishes to access, to the database 23 of the service provider 2 by means of the Internet or other information communication means. At this step, the ciphering means 32 at the terminal 30 side and the ciphering means 24 at the service provider 2 side provides secrecy protection for the information transmitted through the information communication means (Internet for example).

The database 23 sends a number of purchased counts, that corresponds to the item 54 in FIG. 1, and a number of used counts, that corresponds to the item 55 in FIG. 1, to the software program through the Internet or another information communication means 5, in step 105. As a result, it is possible to decide whether it is allowable or not to use the supplemental pay function, by comparing the number of purchased licenses with the number of used counts, in step 106. If the number of used counts equals to the number of purchased counts, thus indicating impossibility of access, it is not possible to use the supplemental pay function.

If the use of supplemental pay function is ended in step 107, the software program accesses the database 23 through the information communication means 5, that is, the Internet or the like, and updates the number of used accesses, in step 108.

As a result, it is possible to use the supplemental pay function within the limits of an authorized number of counts.

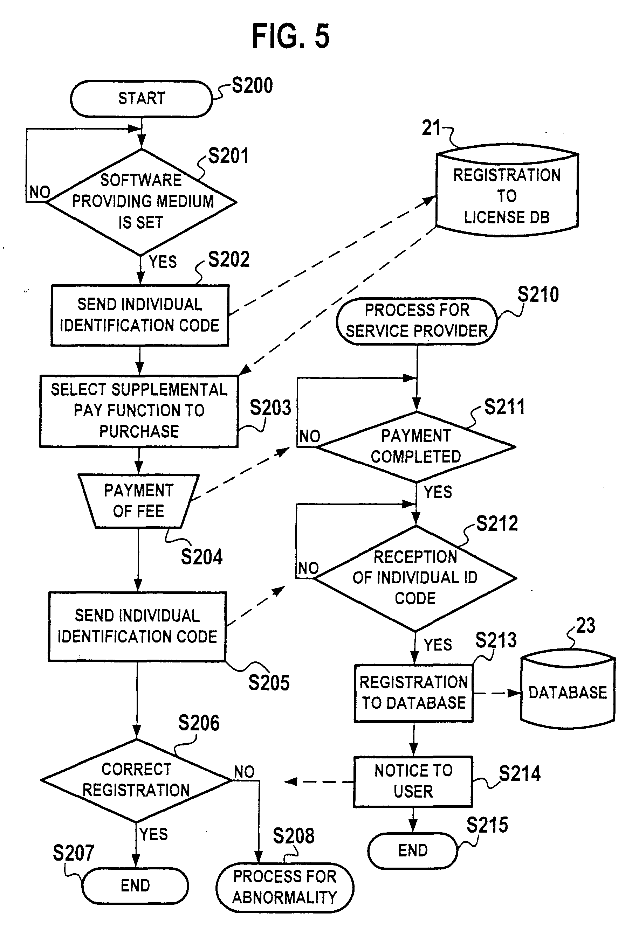

The user 3 can additionally purchase access rights to the supplemental pay function from the service provider 2, through the Internet 5. At this event, the service provider may perform payment to the software developer/supplier 1 upon deducting a handling fee from a charged price. Such procedure is described with reference to FIG. 5.

After starting such procedure at step 200, the user 3 sets the medium 4 to the user terminal 30 in order to allowing the terminal to electrically read out the individual identification code of each medium, in step 201. When purchasing rights to use the supplemental pay function, it is preferable that the user terminal reads out electrically the individual identification code of each medium from the medium 4 at every occasion.

Next, with the individual identification code as a search key, the product database 21 of the service provider 2 is accessed in step 202 and a supplemental pay function to purchase is selected, in step 203.

If a supplemental pay function is selected, the user 3 pays a required fee to the service provider 2, in step 204. Moreover, such methodology can be satisfactorily realized through an existing method of credit card transaction. In addition, the individual identification code of each medium is sent to the service provider 2, in step 205.

At the service provider 2's side, a check-in flow is entered in step 210, and after confirming credit in step 211, the individual identification code is received from the user 3, in step 212, the database 23 is updated in step 213 and, the user 3 is acknowledged of the operation, in step 214.

If the acknowledged user 3 confirms correct registration in step 206, then the process is finished, in step 207. Conversely, if a problem of some sort occurs, solution of the problem is done separately in step 208.

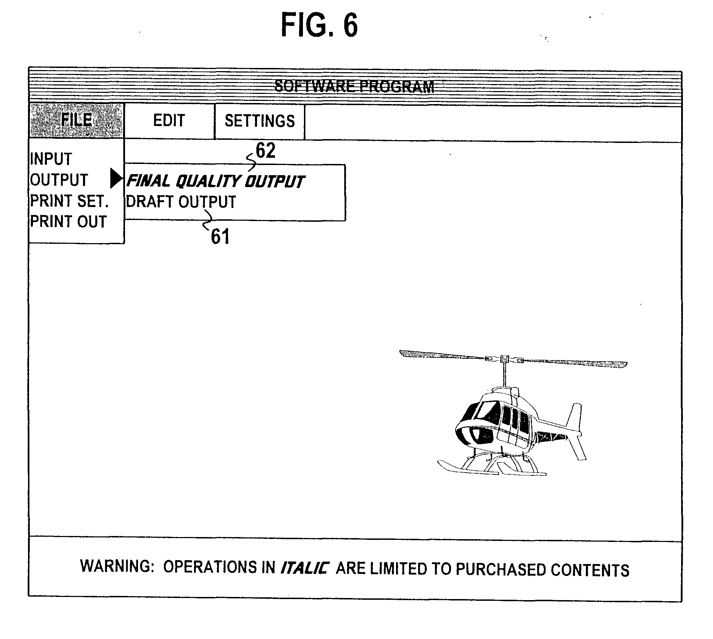

FIG.6 is an example of a display of a terminal displaying an operation of the software program that is set to the software providing medium 4 of the user terminal 30 according to the preferred embodiment of the present invention. Such software program is a software program for controlling a print out operation and, the example in the figure shows a selection of a software program to be outputted, the message "final quality output" 62 in italic represents a supplemental pay function, while the message "draft output" 61 represents a free function.

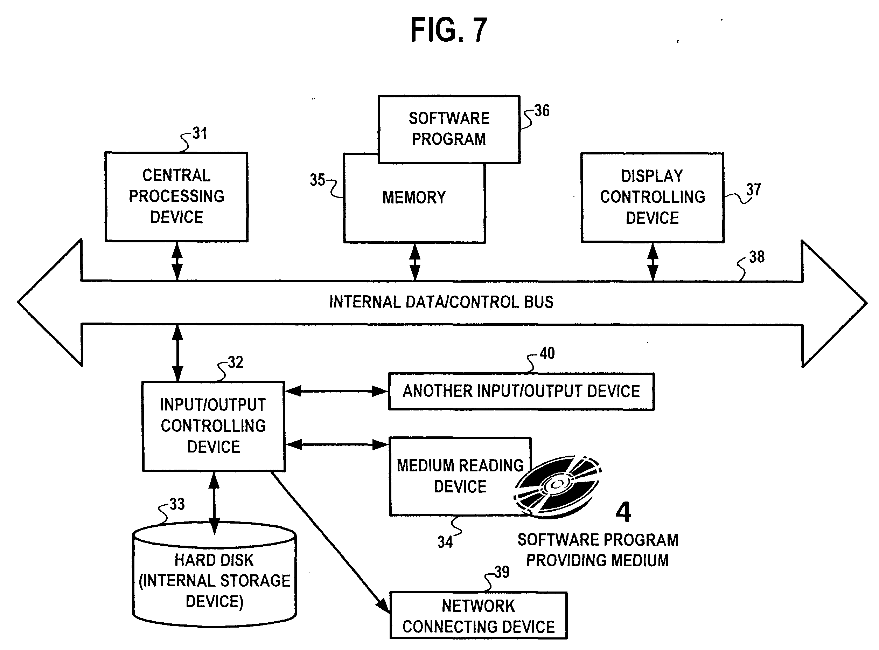

Finally, FIG. 7 shows a detailed structure for the user terminal 30 according to the preferred embodiment of the present invention, in which tag 31 indicates a central processing device, tag 32 indicates an input/output controlling device, tag 33 indicates a hard disk device, tag 34 indicates a medium reading out device, tag 35 indicates a memory, tag 36 indicates a software program, tag 37 indicates a display controlling device, tag 38 indicates an internal data/controlling bus and tag 39 indicates a network connecting device and tag 40 indicates another input/output device.

The user terminal 30 is controlled through the software program 36 stored in the memory 35, and a desired operation is performed by using a software program included in the software program providing means 4 that is installed in the medium reading out device 34 through the input/output controlling device 32. At the event of such operation, the service provider 2 is accessed through the network connecting device 39, in order to receive authorization to access a software program included in the software program providing means 4. On the terminal display screen controlled by the display controlling device 37, for example an access display like the one shown in FIG. 6 is displayed.

Finally, the configurations and structures of respective units and portions described specifically with respect to the preferred embodiments of the present invention are only examples of realization of the present invention, so the embodiments thereof should not be construed as to limiting the technical scope of the present invention.

For example, although the ciphering means 32 and 24 in the preferred embodiment described here is used for information between the terminal 30 and the database 23, it is possible to provide a ciphering means for all information communication between the user 3 and the service provider 2, as well as information communication between the software program developer/supplier 1 and the service provider 2. In other words, it is also preferable to provide the ciphering means for all communication that goes through the information communication means 5.

## Claims

1. A software program providing system for providing and managing access to a software program, comprising:
a storage medium for storing said software program and an individual identification code;
a user terminal capable of installing said storage medium for accessing said software program;
a database management means for storing a user's individual information, information regarding a range of access limitation to said software program and information regarding condition of access to said software program, based on said individual identification code as a search key; and
an information communication means for connecting said database management means with said user terminal; wherein
said software program providing system authorizes said use terminal to access said software program, based on said information regarding said range of access limitation and said information regarding said condition of access to said software program, said information searched by said individual identification code as a search key, said database management means reading said individual identification code from said storage medium installed in said user terminal, through said information communication means.

2. The software program providing system according to claim 1, wherein said database management means further comprises a charging means for charging according to said condition of access to said software program.

3. The software program providing system according to claim 1 or 2, wherein said information communication means further comprises a ciphering means for ciphering communication between said database and said user terminal.

4. The software program providing system according to claim 1, 2 or 3 wherein said storage means further comprises a DVD-ROM and said individual identification code includes a BCA code recorded through a laser beam during a fabrication process of said individual identification code.

5. A software program providing method for providing and managing access to a software program, comprising the following steps of:
storing said software program along with an individual identification code; storing into a database, information regarding a user's individual information, information regarding a range of access limitation to said software program, and information regarding condition of access to said software program;
communicating between a user terminal capable of installing said storage medium and a database management means managing said database, wherein said communicating is done when said user accesses said software program stored in said storage medium;
authorizing said user terminal to access said software program, if said access is limited to a range of access limitation, based on said information regarding said range of access limitation to said software program and said information regarding said access condition to said software program, said information searched from said database based on said individual identification code, wherein said individual identification code is read out from said storage means.

6. The software program providing method according to claim 5, wherein said process of providing authorization for accessing said software program further comprises the step of charging according to said condition of access to said software program.

7. The software program providing method according to claim 5 or 6, wherein said communicating step further comprises the step of ciphering communication between said user terminal and said database management means.

8. A software program providing system for managing access to a software program, comprising:
a database management means for storing a user's individual information, information regarding a range of access limitation to said software program and information regarding condition of access to said software program, based on an individual identification code as a search key; wherein
said software program providing system authorizes a user terminal to access said software program, based on said information regarding said range of access limitation and said information regarding said condition of access to said software program, and said information searched by said individual identification code as a search key.

9. The software program providing system according to claim 8, wherein said database management means reads said individual identification code from a storage medium installed in said user terminal through an information communication means, said storage medium storing said software program and said individual identification code.
